# EUROPEAN PATENT SPECIFICATION

(11) **EP 2 495 114 B1**
(45) Date of publication and mention of the grant of the patent: **18.09.2013**
(21) Application number: 11156724.4
(22) Date of filing: 03.03.2011
(51) Int. Cl.: B60C 23/04, H05K 5/00

(54) **Terminal encapsulated tire monitoring device**
Endpolverkapselte Reifenüberwachungsvorrichtung
Dispositif de surveillance de pneu à terminal encapsulé

(43) Date of publication of application: 05.09.2012
(73) Proprietor: CUB Elecparts Inc., Changhua County 506 (TW)
(72) Inventor: Yu, San-Chuan, Changhua County (TW); Chien, Ting-Chun, Changehua County (TW)
(74) Representative: Becker Kurig Straus

(56) References cited:
- EP-A1- 1 388 437
- DE-A1- 3 833 146
- DE-A1- 19 803 358
- DE-A1- 19 817 198
- US-A1- 2006 196 259

## Description

### BACKGROUND OF THE INVENTION

### 1. Field of the Invention

The present invention relates to tire monitoring technology and more particularly, to a terminal encapsulated tire monitoring device.

### 2. Description of the Related Art

Conventional tire monitoring devices include two types, namely, the wireless parameter writing type and the wired parameter writing type. In a wired parameter writing type, the conducting terminals are soldered to a circuit board, and the housing provides one access hole through which a writing tool is electrically connectable to the conducting terminals for transmitting data.

A terminal encapsulated tire monitoring device according to the preamble of claim 1 is known from EP1388437 A1. Further, DE3833146 A1 shows a housing for a vehicle control unit, wherein a plurality of conducting terminals are partially embedded in said housing.

As the conducting terminals of a wired parameter writing type are directly soldered to the circuit board and suspending in the housing, the conducting terminals tend to be vibrated or biased. After a long use, the conducting terminals may be loosened or disconnected from the circuit board, causing conducting failure. Support means may be added to hold the conducting terminals in position. However, the use of support means complicates the design, occupies much the internal space, requires much labor and time and increases the manufacturing cost.

Therefore, it is desirable to provide a tire monitoring device, which eliminates the drawbacks of the conventional designs and facilitates data access.

### SUMMARY OF THE INVENTION

The present invention has been accomplished under the circumstances in view. It is the main object of the present invention to provide a terminal encapsulated tire monitoring device, which assures positive positioning of conducting terminals with a housing and a circuit board, avoiding vibration loosening or contact failure and, which has a compact component design to minimize the device dimension and to provide extra accommodation space, facilitating fabrication and installation.

To achieve this and other objects of the present invention, a terminal encapsulated tire monitoring device is electrically connectable with at least one contact of a read-write tool, comprising a housing, a sensor unit mounted in the housing and consisting of a circuit board and a plurality of terminal connection portions, a plurality of conducting terminals partially embedded in the housing each having a first contact end electrically connectable by one contact of the read-write tool and a second contact end electrically connected to one terminal connection portion of the sensor unit.

### BRIEF DESCRIPTION OF THE DRAWINGS

Other features and advantages of the present invention will be understood by reference to the following specification in conjunction with the accompanying drawings, which like reference signs denote like elements of the structure.
FIG. 1 is an oblique top elevational view of a terminal encapsulated tire monitoring device in accordance with a first embodiment of the present invention.
FIG. 2 is an oblique bottom elevational view of the terminal encapsulated tire monitoring device in accordance with the first embodiment of the present invention.
FIG. 3 is an exploded view of the terminal encapsulated tire monitoring device in accordance with the first embodiment of the present invention.
FIG. 4 is a sectional view of a part of the terminal encapsulated tire monitoring device in accordance with the first embodiment of the present invention.
FIG. 5 is an oblique top elevational view of a terminal encapsulated tire monitoring device in accordance with a second embodiment of the present invention.
FIG. 6 is an oblique bottom elevational view of the terminal encapsulated tire monitoring device in accordance with the second embodiment of the present invention.
FIG. 7 is an exploded view of the terminal encapsulated tire monitoring device in accordance with the second embodiment of the present invention.
FIG. 8 is an oblique top elevational view of a terminal encapsulated tire monitoring device in accordance with a third embodiment of the present invention.
FIG. 9 is an exploded view of the terminal encapsulated tire monitoring device in accordance with the third embodiment of the present invention.
FIG. 10 is an oblique bottom elevational view of the terminal encapsulated tire monitoring device in accordance with the third embodiment of the present invention.
FIG. 11 is an oblique top elevational view of the terminal encapsulated tire monitoring device in accordance with a fourth embodiment of the present invention.

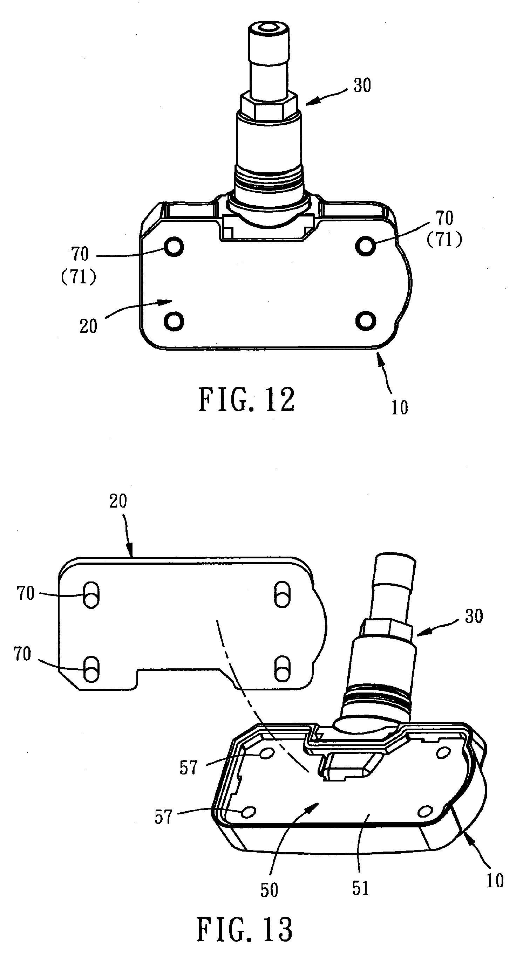

FIG. 12 is an oblique bottom elevational view of the terminal encapsulated tire monitoring device in accordance with a fourth embodiment of the present invention.
FIG. 13 is an exploded view of the terminal encapsulated tire monitoring device in accordance with the fourth embodiment of the present invention.

### DETAILED DESCRIPTION OF THE INVENTION

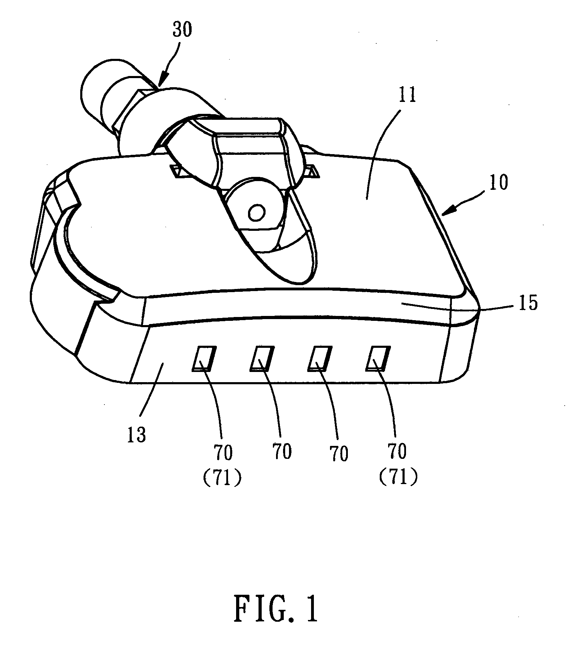

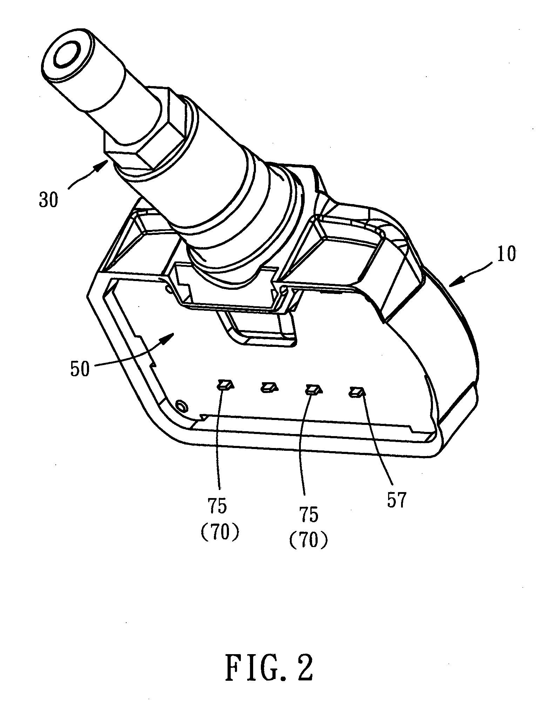

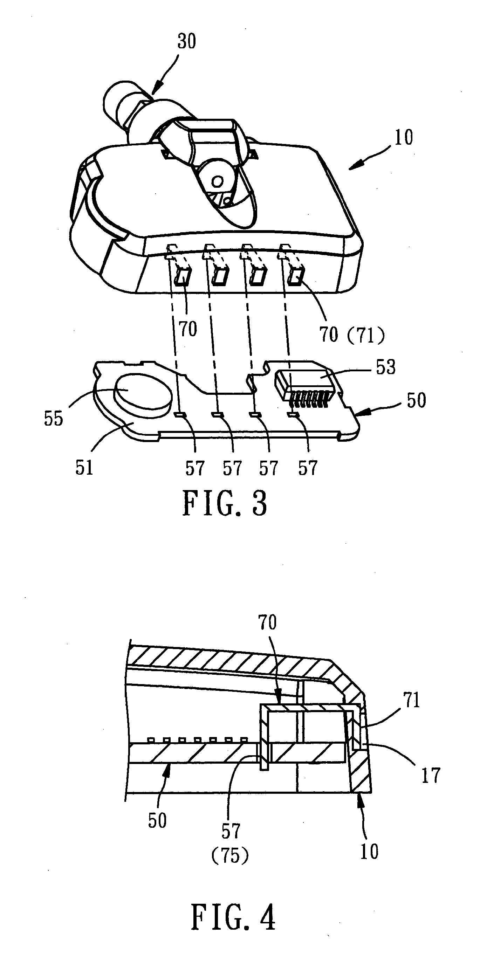

Referring to FIGS. 1-4, a terminal encapsulated tire monitoring device in accordance with a first embodiment of the present invention is electrically connectable with one or multiple contacts (not shown) of a read write tool (not shown). The terminal encapsulated tire monitoring device comprises a housing (not marked with a number), an air valve **30**, a sensor unit **50** and a plurality of conducting terminals **70**.

The housing comprises a first shell member **10**. The first shell member **10** comprises a top wall **11**, a peripheral wall **13** and a corner edge **15**. Further, the housing is made of plastics or rubber by means of injection molding.

The air valve **30** is mounted in the aforesaid housing and adapted for inflating a vehicle tire. According to this embodiment, the air valve **30** can be embedded in the housing, or affixed to the housing by means of any other fixation method.

The sensor unit**50** is mounted in the aforesaid housing, comprising a circuit board **51**, a controller **53**, a battery **55** and a plurality of terminal connection portions 57 located on the circuit board **51.** The sensor unit **50** has multiple functions in setting programs, sensing different items and transmitting data.

The conducting terminals **70** are configured into U-shape and arranged in a row and partially embedded in the aforesaid housing, each having a first contact end **71** for the contact of one respective contact of a read-write tool electrically and a second contact end **75** electrically connected to one respective terminal connection portion **57** of the sensor unit **50.** According to this embodiment, the second contact end **75** inserted into one respective terminal connection portion (via hole) **57** of the sensor unit **50** and electrically soldered thereto. Further, the part of each conducting terminal **70** that is embedded in the housing has a rough surface.

As stated above, the conducting terminals **70** are partially embedded in the aforesaid housing. The housing has a plurality of holes **17** respectively disposed corresponding to the first contact ends **71** of the conducting terminals **70** for the insertion of the respective contacts of a read-write tool into contact with the respective first contact ends **71** of the conducting terminals **70.** According to this embodiment, the conducting terminals **70** are partially embedded in the peripheral wall **13** of the housing.

The operation and effects of the terminal encapsulated tire monitoring device will be explained hereinafter:

Referring to FIGS. 1~4 again, the conducting terminals **70** are put in the mold before injection-molding of the housing, and therefore the conducting terminals **70** are partially embedded in the housing after molding. Thus, the conducting terminals **70** are tightly affixed to the housing, avoiding vibration or contact failure, and demonstrating a significant improvement over the prior art designs.

Thus, the contacts of a read-write tool can be respectively electrically connected to the first contact ends **71** of the conducting terminals **70** to form a loop for enabling the read-write tool to read in data from the sensor unit **50** or to write data into the sensor unit **50**, performing setting or operation of the sensor unit **50**. After removal of the read-write tool from the first contact ends **71** of the conducting terminals **70**, the circuit is opened again.

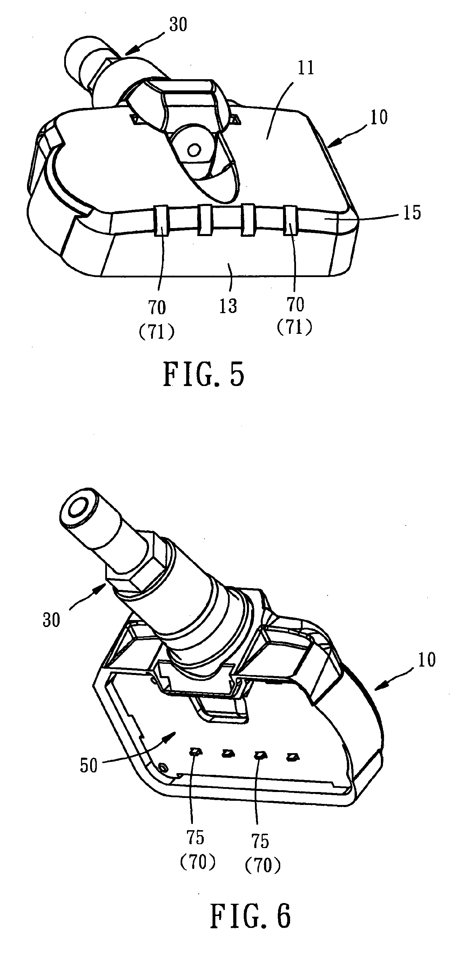

FIGS. 5~7 illustrate a terminal encapsulated tire monitoring device in accordance with a second embodiment of the present invention. Similar to the aforesaid first embodiment, the terminal encapsulated tire monitoring device in accordance with this second embodiment consists of a housing, an air valve **30**, a sensor unit **50** and a set of conducting terminals **70**. The main feature of this second embodiment is that the first contact end **71** of each conducting terminals **70** is disposed in the corner edge **15** of the housing.

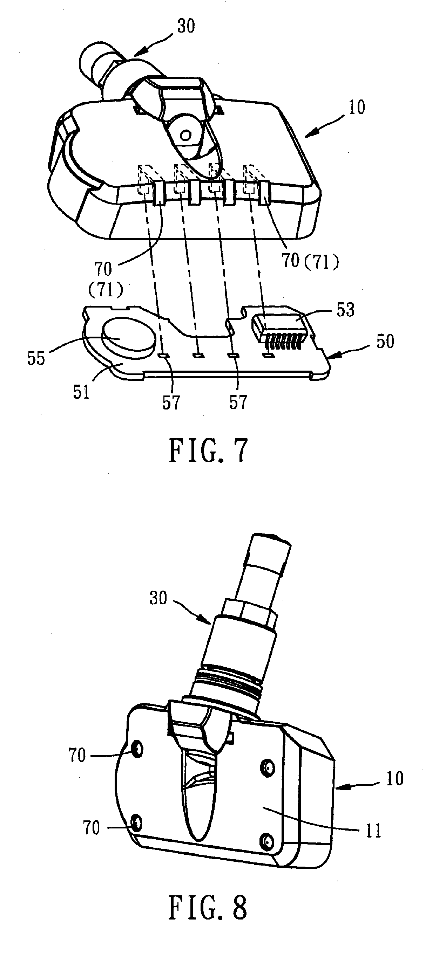

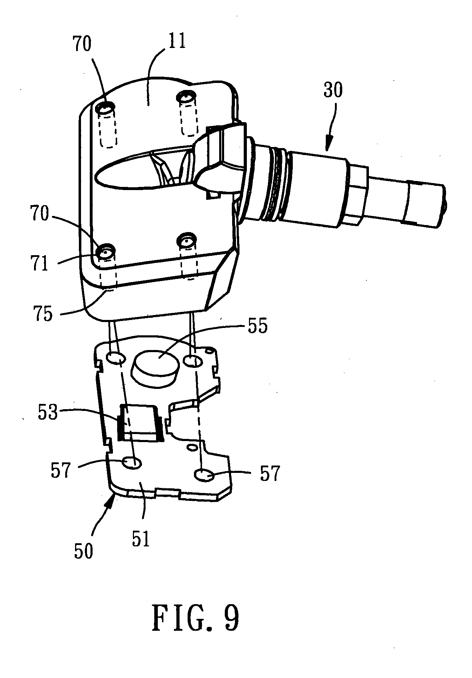

FIGS. 8~10 illustrate a terminal encapsulated tire monitoring device in accordance with a third embodiment of the present invention. Similar to the aforesaid first and second embodiments, the terminal encapsulated tire monitoring device in accordance with this third embodiment consists of a housing, an air valve **30**, a sensor unit **50** and a set of conducting terminals **70**. The main feature of this third embodiment is that the conducting terminals **70** are configured into a rod shape with the respective first contact ends **71** fixedly fastened to the top wall **11** of the housing. Further, the conducting terminals **70** arranged in four corners in the housing to enhance positioning of the sensor unit **50** in the housing. Alternatively, the conducting terminals **70** can be arranged in the housing to show a pattern like a loop or ring, or set in the housing in any other arrangement.

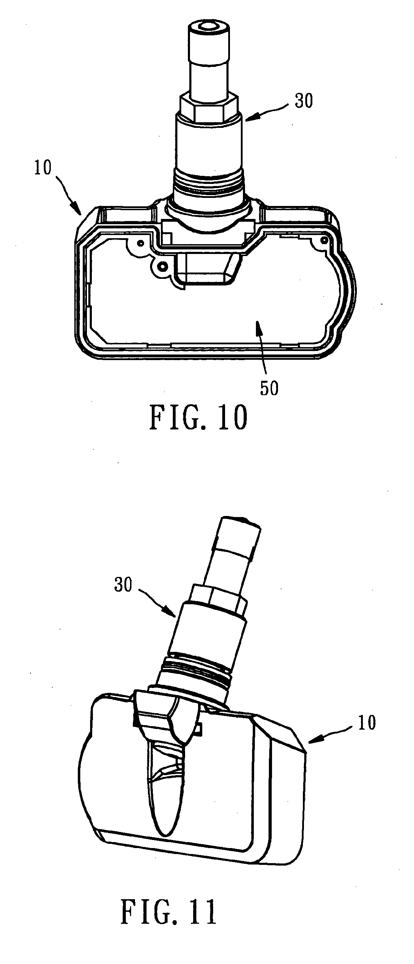

FIGS. 11∼13 illustrate a terminal encapsulated tire monitoring device in accordance with a fourth embodiment of the present invention. Similar to the aforesaid first, second and third embodiments, the terminal encapsulated tire monitoring device in accordance with this fourth embodiment consists of a housing, an air valve **30**, a sensor unit **50** and a set of conducting terminals **70**. The main feature of this fourth embodiment is that the housing comprises a first shell member **10** and a second shell member**20**; the conducting terminals **70** are embedded in the second shell member **20**. The second shell member **20** of the housing of this fourth embodiment has a bottom wall **21**. The conducting terminals **70** are embedded in the bottom wall **21** of the second shell member **20**. The second shell member **20** with the conducting terminals **70** are then assembled with the first shell member **10**.

It is to be understood that the housing in either of the aforesaid various embodiment can be formed of a first shell member **10** and a second shell member **20**.

Except the aforesaid exemplars, the terminal encapsulated tire monitoring device can have other modifications or enhancement.

For example, except the technique of electrically soldering the second contact ends **75** of the conducting terminals **70** to the respective terminal connection portions **57** of the sensor unit **50**, the second contact ends **75** of the conducting terminals **70** can be electrically connected to the respective terminal connection portions **57** of the sensor unit **50** by any of a variety of other conducting methods.

Further, except by directly connecting the conducting terminals **70** to the circuit board **51**, the conducting terminals **70** can be electrically connected to the circuit board **51** by means of an adapter or cable.

Further, broadly speaking the terminal encapsulated tire monitoring device can be configured having at least one conducting terminal **70** to constitute the essential characteristics of the present invention. When a less number of conducting terminals are installed, the number of conducting items is relatively reduced; for example, can only writing in an encoding program, charging and/or one of various settings. Preferably, multiple conducting terminals **70** are provided for different settings or different purposes.

Further, the aforesaid air valve **30** is not a requisite element. The terminal encapsulated tire monitoring device can be configured without the aforesaid air valve **30** and directly installed in a vehicle tire or wheel rim, i.e., the terminal encapsulated tire monitoring device can be made simply comprising a housing, a sensor unit **50** and a set of conducting terminals **70**.

Further, except the technique of partially embedding the conducting terminals **70** in the housing by means of injection molding, the conducting terminals **70** can be embedded in the housing by means of ultrasonic plastic welding or ultrasonic metal welding.

Further, except the aforesaid U-shape or rod shape, the conducting terminals **70** can be configured into a L-shape or any other configuration.

In conclusion, the terminal encapsulated tire monitoring device assures positive positioning of the conducting terminals with the housing and the circuit board, avoiding vibration loosening or contact failure. The component design is compact so that the housing can be small-sized or can provide extra accommodation space, facilitating fabrication and installation.

## Claims

1. A terminal encapsulated tire monitoring device electrically connectable with at least one contact of a read-write tool, said terminal encapsulated tire monitoring device comprising:
a housing;
a sensor unit (50) mounted in said housing, said sensor unit (50) comprising a circuit board (51) and a plurality of terminal connection portions (57);
a plurality of conducting terminals (70), each said conducting terminal (70) having a first contact end (71) electrically connectable by one contact of said read-write tool and a second contact end (75) electrically connected to one said terminal connection portion (57) of said sensor unit (50), **characterized in that**
said plurality of conducting terminals (70) are partially embedded in said housing.

2. The terminal encapsulated tire monitoring device as claimed in claim 1, wherein said housing comprises a first shell member (10) and a second shell member (20); said conducting terminals (70) are embedded in said first shell member (10).

3. The terminal encapsulated tire monitoring device as claimed in claim 1, wherein said housing comprises a first shell member (10) and a second shell member (20); said conducting terminals (70) are embedded in said second shell member (20).

4. The terminal encapsulated tire monitoring device as claimed in claim 1, wherein said conducting terminals (70) are embedded in at least one of a top wall (11), a peripheral wall (13), a corner edge (15) and a bottom wall (21) of said housing.

5. The terminal encapsulated tire monitoring device as claimed in claim 1, wherein said conducting terminals (70) are arranged in a row.

6. The terminal encapsulated tire monitoring device as claimed in claim 1, wherein said conducting terminals (70) are arranged in multiple rows.

7. The terminal encapsulated tire monitoring device as claimed in claim 1, wherein said conducting terminals (70) are arranged in said housing to show a pattern like a loop or ring.

8. The terminal encapsulated tire monitoring device as claimed in claim 1, wherein said conducting terminals (70) are configured into one ofU-shape, rod shape and L-shape.

9. The terminal encapsulated tire monitoring device as claimed in claim 1, wherein said conducting terminals (70) are embedded in said housing by means of one of the techniques of injection molding and welding.

10. The terminal encapsulated tire monitoring device as claimed in claim 1, wherein each said conducting terminal (70) has a rough surface embedded in said housing.

## Patentansprüche

1. Reifenüberwachungsvorrichtung mit gekapselten Anschlüssen, die mit mindestens einem Kontakt eines Lese-Schreib-Werkzeugs elektrisch verbunden werden kann, worin die Reifenüberwachungsvorrichtung mit gekapselten Anschlüssen umfasst:
ein Gehäuse;
eine Sensoreinheit (50), die in dem Gehäuse befestigt ist, worin die Sensoreinheit (50) eine Platine (51) und mehrere Anschlussabschnitte (57) umfasst;
mehrere leitende Anschlüsse (70), worin jeder leitender Anschluss (70) ein erstes Kontaktstück (71), das durch einen Kontakt des Lese-Schreib-Werkzeugs elektrisch verbunden werden kann, und ein zweites Kontaktstück (75) aufweist, das mit einem der Anschlussabschnitte (57) der Sensoreinheit (50) elektrisch verbunden ist, **dadurch gekennzeichnet, dass**
die mehreren leitenden Anschlüsse (70) teilweise in dem Gehäuse eingebettet sind.

2. Reifenüberwachungsvorrichtung mit gekapselten Anschlüssen nach Anspruch 1, worin das Gehäuse ein erstes Gehäuseelement (10) und ein zweites Gehäuseelement (20) umfasst; worin die leitenden Anschlüsse (70) in dem ersten Gehäuseelement (10) eingebettet sind.

3. Reifenüberwachungsvorrichtung mit gekapselten Anschlüssen nach Anspruch 1, worin das Gehäuse ein erstes Gehäuseelement (10) und ein zweites Gehäuseelement (20) umfasst; worin die leitenden Anschlüsse (70) in dem zweiten Gehäuseelement (20) eingebettet sind.

4. Reifenüberwachungsvorrichtung mit gekapselten Anschlüssen nach Anspruch 1, worin die leitenden Anschlüsse (70) in mindestens einem einer oberen Wand (11), einer Umfangswand (13), einer Kante (15) und einer unteren Wand (21) des Gehäuses eingebettet sind.

5. Reifenüberwachungsvorrichtung mit gekapselten Anschlüssen nach Anspruch 1, worin die leitenden Anschlüsse (70) in einer Reihe angeordnet sind.

6. Reifenüberwachungsvorrichtung mit gekapselten Anschlüssen nach Anspruch 1, worin die leitenden Anschlüsse (70) in mehreren Reihen angeordnet sind.

7. Reifenüberwachungsvorrichtung mit gekapselten Anschlüssen nach Anspruch 1, worin die leitenden Anschlüsse (70) in einer Muster-, Schleifen- oder Ring-ähnlichen Form in dem Gehäuse angeordnet sind.

8. Reifenüberwachungsvorrichtung mit gekapselten Anschlüssen nach Anspruch 1, worin die leitenden Anschlüsse (70) in einer, einer U-Form, Stabform und L-Form ausgestaltet sind.

9. Reifenüberwachungsvorrichtung mit gekapselten Anschlüssen nach Anspruch 1, worin die leitenden Anschlüsse (70) in dem Gehäuse mittels eines des Spritzguss- und Schweiß-Verfahrens eingebettet sind.

10. Reifenüberwachungsvorrichtung mit gekapselten Anschlüssen nach Anspruch 1, worin jeder leitende Anschluss (70) eine raue Oberfläche aufweist, die in das Gehäuse eingebettet ist.

## Revendications

1. Une borne de dispositif de surveillance de pneumatique encapsulé pouvant être connectée électriquement à au moins un contact d'un outil de lecture-écriture, ladite borne de dispositif de surveillance de pneumatique encapsulé comprenant:
un boîtier; une unité de capteur (50) montée dans ledit boîtier, ladite unité de capteur (50) comprenant une carte de circuit imprimé (51) et une pluralité de portions de connexion de borne (57); une pluralité de bornes conductrices (70), chacune desdites conduites de borne(70) comportant une première extrémité de contact (71) pouvant être reliée électriquement par contact audit outil de lecture-écriture et une seconde extrémité de contact (75) connectée électriquement à une desdites portions de connexion de borne (57) de ladite unité de détection (50), **caractérisé en ce que** ladite pluralité de bornes conductrices (70) est en partie noyée dans ledit logement.

2. La borne de dispositif de surveillance de pneumatique encapsulé selon la revendication 1, dans laquelle ledit boîtier comprend un premier élément de coque (10) et un second élément de coque (20) et lesdites bornes conductrices (70) sont noyées dans ledit premier élément de coque (10).

3. La borne de dispositif de surveillance de pneumatique encapsulé selon la revendication 1, dans laquelle ledit boîtier comprend un premier élément de coque (10) et un second élément de coque (20) et lesdites bornes conductrices (70) sont noyées dans ledit second élément de coque (20).

4. La borne de dispositif de surveillance de pneumatique encapsulé selon la revendication 1, dans laquelle lesdites bornes conductrices (70) sont noyés dans au moins l'un de une paroi supérieure (11), une paroi périphérique (13), un angle (15) et une paroi de fond (21) dudit boîtier.

5. La borne de dispositif de surveillance de pneumatique encapsulé selon la revendication 1, dans laquelle lesdites bornes conductrices (70) sont disposées en une rangée.

6. La borne de dispositif de surveillance de pneumatique encapsulé selon la revendication 1, dans lequel lesdites bornes conductrices (70) sont disposées en plusieurs rangées.

7. La borne de dispositif de surveillance de pneumatique encapsulé selon la revendication 1, dans laquelle lesdites bornes conductrices (70) sont disposées dans ledit boîtier pour présenter une configuration telle une boucle ou un anneau.

8. La borne de dispositif de surveillance de pneumatique encapsulé selon la revendication 1, dans laquelle lesdites bornes conductrices (70) sont configurées en l'une des forme de U, forme de tige et forme de L.

9. La borne de dispositif de surveillance de pneumatique encapsulé selon la revendication 1, dans lequel lesdites bornes conductrices (70) sont noyées dans ledit boîtier au moyen de l'une des techniques suivantes : moulage par injection et soudure.

10. La borne de dispositif de surveillance de pneumatique encapsulé selon la revendication 1, dans lequel chacune desdites conduites de borne de (70) comporte une surface rugueuse incorporée dans ledit boîtier.
